# EUROPEAN PATENT APPLICATION

(11) **EP 2 085 355 A1**
(43) Date of publication of application: **05.08.2009**
(21) Application number: 07829975.7
(22) Date of filing: 17.10.2007
(51) Int. Cl.: C01B 3/56, B01D 53/04, B01J 20/18, B01J 20/20

(54) **METHOD AND APPARATUS FOR SEPARATING HYDROGEN GAS**

(30) Priority: 20.10.2006 JP 2006286283
(71) Applicant: Sumitomo Seika Chemicals CO. LTD., Kako-gun Hyogo 675-0145 (JP)
(72) Inventor: HARUNA, Kazuo, Osaka-shi Osaka 541-0041 (JP); MIYAKE, Masanori, Osaka-shi Osaka 541-0041 (JP); SASANO, Hiroaki, Kako-gun Hyogo 675-0145 (JP); FUKUSHIMA, Mayumi, Kako-gun Hyogo 675-0145 (JP)
(74) Representative: Hayes, Adrian Chetwynd
(86) International application number: PCT/JP2007/070241
(87) International publication number: WO 2008/047828

(57) **Abstract**

A hydrogen gas separation method utilizing PSA process employs a plurality of adsorption towers A, B, C loaded with an adsorbent for separating the hydrogen gas from a hydrogencontaining gas mixture, and a cycle including introducing the gas mixture into the adsorption tower, adsorbing unnecessary gas in the gas mixture by the adsorbent, leading out product gas having high hydrogen concentration from the adsorption tower, desorbing the unnecessary gas from the adsorbent, and leading out desorbed gas containing the unnecessary gas and residual gas in the adsorption tower from the adsorption tower, is repeated. The adsorbent includes an activated carbon-based first adsorbent D located on the upstream side of the flow direction of the gas mixture in the adsorption tower with an filling ratio of 60 to 80%, and a zeolite-based second adsorbent E located on the downstream side of the flow direction with filling ratio of 40 to 20%.

## Description

### TECHNICAL FIELD

The present invention relates to a method and an apparatus for removing unnecessary gas such as carbon dioxide from a gas mixture predominantly containing hydrogen, thereby separating hydrogen gas, through a pressure swing adsorption (PSA) process.

### BACKGROUND ART

In industrial fields, hydrogen (product gas with high hydrogen gas concentration) is utilized for glass melting, semiconductor manufacturing, optical fiber manufacturing, heat treatment for metals, meltdown, oil hardening and so forth. Lately, hydrogen stations for supplying fuel to fuel cell vehicles have come to be constructed, which is creating greater demand for efficient production of high-purity hydrogen gas.

As one of the practical methods of separating the hydrogen gas from a gas mixture containing hydrogen, the pressure swing adsorption (hereinafter, PSA) process is known. The gas separation by the PSA process includes, for example, repeating a cycle of at least an adsorption step and a desorption step in each of a plurality of adsorption towers loaded with an adsorbent to which a predetermined unnecessary gas is preferentially adsorbed. In the adsorption step, the gas mixture is introduced into the adsorption tower so that the unnecessary gas in the gas mixture is adsorbed to the adsorbent, and thereby high-purity hydrogen gas is led out. In the desorption step, the unnecessary gas is desorbed from the adsorbent, and then the desorbed gas containing the unnecessary gas and residual gas in the adsorption tower is led out of the adsorption tower. The PSA process has undergone various improvements, from the viewpoint of the purity of the product hydrogen gas, recovery rate, and so on.

Examples of such improvement include repeating the cycle including an adsorption step, a depressurization step, a desorption step, a purging step, and a pressurization step, in each adsorption tower (See Patent Document 1, for example). Patent Document 1 shows, for example, a method of separating hydrogen gas by the PSA process using a plurality of adsorption towers loaded with an adsorbent composed of a carbon molecular sieve and a Ca-A type zeolite. The method includes introducing residual gas in an adsorption tower under high pressure after the adsorption step into another adsorption tower under low pressure after the desorption step, so that the depressurization step (first and second depressurization step) is executed in the former adsorption tower, and the purging step and the pressurization step (first pressurization step) are executed in the latter adsorption tower at the same time. According to this method, the depressurization step is executed in two stages of the first depressurization step and the second depressurization step. In the purging step performed at the same time as the first depressurization step, the residual gas (having hydrogen gas concentration close to that of the product gas) in the adsorption tower to be depressurized is utilized, and hence a higher hydrogen gas recovery rate can be attained compared with, for example, the case where solely the product gas is utilized for purging. Also, in the pressurization step (first pressurization step) performed at the same time as the second depressurization step, the residual gas (still having hydrogen gas concentration close to that of the product gas) in the adsorption tower to be depressurized is recovered into the adsorption tower to be pressurized, which also contributes to improving the hydrogen gas recovery rate. Adopting such method enables improving the hydrogen gas recovery rate while maintaining the hydrogen gas concentration in the product gas at a high level, through the hydrogen gas separation by the PSA process.

The foregoing advantageous effects are proved by e.g. the inventive examples of Patent Document 1, and the hydrogen gas separation method by the PSA process according to this document actually achieves a higher hydrogen gas recovery rate (76.5 to 80.2%) through the first and the second depressurization step (inventive examples 1 to 3 of the patented document 1), compared with the hydrogen gas recovery rate (69.5%) achieved when the product gas alone is utilized in the purging step (comparative example of Patent Document 1). Under the ongoing increase in demand for the hydrogen gas for industrial use, however, a still higher hydrogen gas recovery rate is required. From such viewpoint, the recovery rate achieved by the method according to Patent Document 1 (maximum 80.2%) still has a room for improvement.
Patent document 1: JP-A-2004-66125

### DISCLOSURE OF THE INVENTION

The present invention has been proposed under the foregoing situation. It is therefore an object to improving the hydrogen gas recovery rate of product gas obtained upon separating hydrogen gas by the PSA process from a gas mixture produced through a steam-reforming reaction of a hydrocarbon-based material.

A first aspect of the present invention provides a method of separating hydrogen gas from a gas mixture predominantly containing hydrogen as a main component, the hydrogen being obtained by steam-reforming reaction of a hydrocarbon-based material, the method being performed by pressure-swing adsorption process utilizing a plurality of adsorption towers loaded with an adsorbent, the method comprising repeating a cycle including an adsorption step and a desorption step, the adsorption step including introducing the gas mixture into the adsorption tower, adsorbing unnecessary gas in the gas mixture to the adsorbent, and leading out product gas having high hydrogen gas concentration from the adsorption tower, the desorption step including desorbing the unnecessary gas from the adsorbent and leading out desorbed gas from the adsorption tower, the desorbed gas containing the unnecessary gas and residual gas in the adsorption tower, wherein the adsorbent includes an activated carbon-based first adsorbent located on an upstream side of a flow direction of the gas mixture in the adsorption tower and provided in an filling ratio of 60 to 80%, and a zeolite-based second adsorbent located on a downstream side of the flow direction and provided in an filling ratio of 40 to 20%.

Through consistent study for achieving the foregoing object, the present inventors have directed the attention to the possibility that the type, location, and filling ratio of the adsorbent provided in the adsorption tower may affect the hydrogen gas recovery rate, and accomplished the present invention upon discovering that the hydrogen gas recovery rate can be further improved in the case where the adsorbent satisfies a predetermined condition. Specifically, as understood from inventive examples to be described below, the hydrogen gas recovery rate is prominently improved by loading the adsorption tower with the activated carbon-based first adsorbent on the upstream side of a flow direction of the gas mixture in the adsorption tower and in an filling ratio of 60 to 80%, and the zeolite-based second adsorbent on the downstream side of the flow direction and in an filling ratio of 40 to 20%.

The foregoing effect originates from the difference in adsorption capability between the activated carbon-based adsorbent and the zeolite-based adsorbent, with respect to gases. The activated carbon-based adsorbent is superior in adsorption of carbon dioxide, while the zeolite-based adsorbent is superior in adsorption of carbon monoxide. In the hydrogen gas separation method, the gas mixture from which hydrogen is to be separated is obtained by steam-reforming reaction of a hydrocarbon-based material. The gas mixture contains a greater percentage of carbon dioxide, which is a by-product, than carbon monoxide. Accordingly, by locating the activated carbon-based adsorbent on the upstream side, carbon dioxide is adsorbed to be removed on the upstream side, and hence on the downstream side beyond the region where the activated carbon-based adsorbent is present, the zeolite-based adsorbent efficiently removes carbon monoxide by adsorption, free from influence of coexisting carbon dioxide (if carbon dioxide is also present, a part thereof is adsorbed to the zeolite-based adsorbent, which results in lower adsorption of carbon monoxide). It is thought that locating thus the adsorbents selectively ensure that the adsorption capability with respect to unnecessary gases is adequately exhibited, and that consequently a higher hydrogen gas recovery rate is attained in the product gas.

Preferably, the first adsorbent has average pore diameter of 1.5 to 2.0 nm.

Preferably, in the above adsorption step, the adsorption pressure is 0.5 to 4.0 MPa.

Preferably, the hydrocarbon-based material contains at least one gaseous or liquid material selected from the group consisting of town gas predominantly composed of natural gas, propane, butane, gasoline, naphtha, kerosene, methanol, ethanol, and dimethylether.

A second aspect of the present invention provides an apparatus for separating hydrogen gas from a gas mixture predominantly containing hydrogen as a main component, the hydrogen being obtained by steam-reforming reaction of a hydrocarbon-based material, the apparatus comprising a plurality of adsorption towers loaded with an adsorbent to perform separation by pressure-swing adsorption process, the separation including introducing the gas mixture into the adsorption tower, adsorbing unnecessary gas in the gas mixture to the adsorbent, leading out product gas having high hydrogen gas concentration from the adsorption tower, desorbing the unnecessary gas from the adsorbent, and leading out desorbed gas, from the adsorption tower, the desorbed gas containing the unnecessary gas and residual gas in the adsorption tower, wherein the adsorbent includes an activated carbon-based first adsorbent located on an upstream side of a flow direction of the gas mixture in the adsorption tower and provided in an filling ratio of 60 to 80%, and a zeolite-based second adsorbent located on a downstream side of the flow direction and provided in an filling ratio of 40 to 20%.

Such hydrogen gas separation apparatus enables executing the method according to the first aspect of the present invention, and therefore provides the same advantageous effects as those offered by the first aspect of the present invention.

Other features and advantages of the present invention will become more apparent from the following detailed description given with reference to the accompanying drawings.

### BRIEF DESCRIPTION OF THE DRAWINGS

Fig. 1 is a schematic diagram showing a configuration of a three-tower type PSA gas separation apparatus that executes a hydrogen gas separation method according to the present invention;
Figs. 2(a) to 2(i) are gas flow charts corresponding to the steps of the hydrogen gas separation method according to the present invention;
Fig. 3 is a graph showing the adsorption isotherm of activated carbon and zeolite with respect to carbon dioxide;
Fig. 4 is a graph showing the adsorption isotherm of the activated carbon and the zeolite with respect to methane; and
Fig. 5 is a graph showing the adsorption isotherm of the activated carbon and the zeolite with respect to carbon monoxide.

### BEST MODE FOR CARRYING OUT THE INVENTION

Preferred embodiments of a method of the concentrating/separating hydrogen gas from a hydrogencontaining gas mixture will be described referring to the drawings.

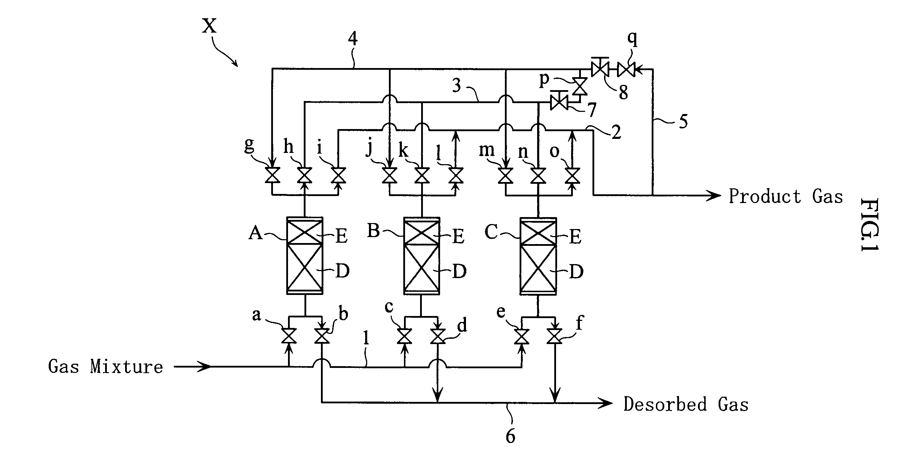

The method of separating hydrogen gas according to the present invention may be executed, for example, with a PSA gas separation apparatus X shown in Fig. 1. The PSA gas separation equipment X shown in Fig. 1 includes three adsorption towers A, B, C, a gas mixture piping 1, a product gas piping 2, a gas extraction piping 3, a reverse flow piping 4, a product gas return piping 5, and a gas discharge piping 6.

The adsorption towers A, B, C are each loaded with a predetermined adsorbent. The adsorbent includes an activated carbon-based first adsorbent D located on the upstream side (lower portion of the adsorption tower in Fig. 1) of the flow direction of the gas mixture in each adsorption tower, and a zeolite-based second adsorbent E located on the downstream side of the flow direction (upper portion of the adsorption tower in Fig. 1). Examples of the first adsorbent D include a coconut shell-based or coal-based activated carbon, and those having average pore diameter of 1.5 to 2.0 nm, preferably 1.7 to 1.8 nm are suitable. Examples of such activated carbon include a coconut shell-based activated carbon. Examples of the second adsorbent E include a Ca-A type zeolite molecular sieve, a Ca-X zeolite molecular sieve, and a Li-X zeolite molecular sieve. The first and the second adsorbent D, E have a predetermined filling ratio (in volume) with respect to the overall capacity for the adsorbent. Specifically, the filling ratio of the first adsorbent D is set to be 60 to 80%, and that of the second adsorbent E to be 40 to 20%.

The pipings 1 to 6 are provided with switchover valves (a) to (q), and the gas extraction piping 3, the reverse flow piping 4, and the product gas return piping 5 are provided with a flow control valve 7, 8, respectively. In the hydrogen gas separation executed by the PSA gas separation apparatus X according to the PSA gas separation method, for example an adsorption step, a depressurization step (first depressurization step and second depressurization step), a desorption step, a purging step, and a pressurization step (first pressurization step and second pressurization step) can be executed in the respective adsorption towers A, B, C, by selecting the open/close state of the respective switchover valves (a) to (q).

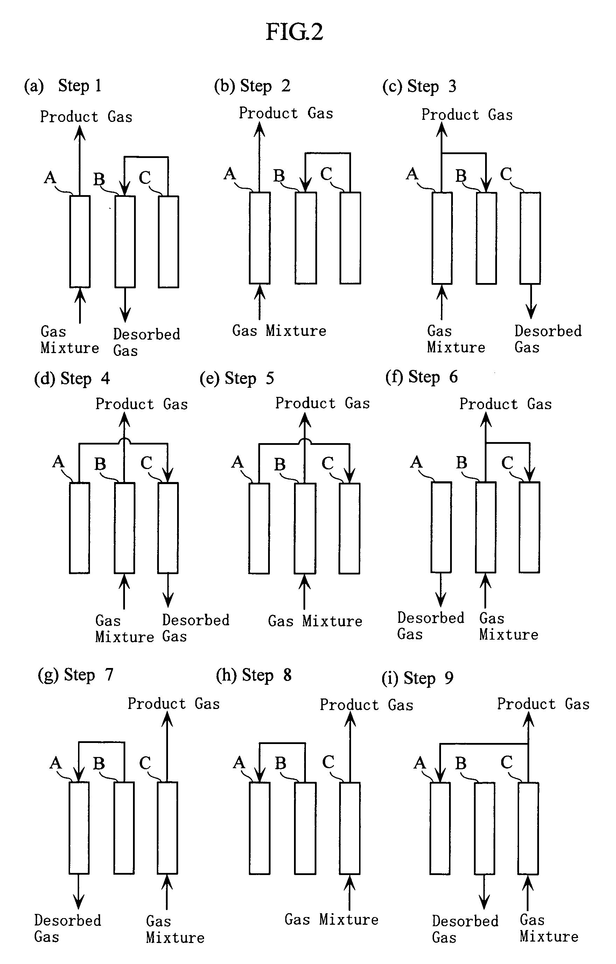

Specifically, in the adsorption towers A, B, and C, the predetermined steps (steps 1 to 9) are executed in parallel. The gas flow in the PSA gas separation apparatus X in each step is schematically illustrated in Figs. 2(a) to 2(i).

In the step 1, the adsorption step, the purging step, and the first depressurization step are executed in the adsorption tower A, B, and C, respectively, establishing the gas flow shown in Fig. 2(a).

As shown in Figs. 1 and 2(a), to the adsorption tower A the gas mixture is introduced through the gas mixture piping 1 and the switchover valve (a). The gas mixture is obtained by steam-reforming reaction of a hydrocarbon-based material, and contains hydrogen as the principal component and carbon dioxide as the unnecessary gas. It is to be noted that the hydrocarbon-based material referred to in the present invention includes town gas predominantly composed of natural gas, propane, butane, gasoline, naphtha, kerosene, alcohol such as methanol or ethanol, and dimethylether, for example. Through the steam-reforming reaction of the town gas, hydrogen (main product) and carbon dioxide (by-product) are generated. In this case, the gas mixture further contains unnecessary gases such as unreacted methane and carbon monoxide as impurity.

In the adsorption step, the gas mixture flows through the adsorption tower A maintained under a predetermined high pressure. In this process, the first adsorbent D primarily removes carbon dioxide and methane by adsorption, and then the second adsorbent E primarily removes carbon monoxide by adsorption, so that the product gas having high hydrogen gas concentration is discharged out of the tower. The product gas is recovered through the switchover valve (i) and the product gas piping 2.

The gas discharged from the adsorption tower C (purging gas) is introduced to the adsorption tower B, through the switchover valve (n), the gas extraction piping 3, the flow control valve 7, the switchover valve (p), the reverse flow piping 4, and the switchover valve (j). Since, In contrast to the adsorption tower C which previously executed the adsorption step, the adsorption tower B previously executed the desorption step (See step 9 shown in Fig. 2(i)), the pressure in the adsorption tower C is higher than that in the adsorption tower B. Accordingly, introducing the extracted gas from the adsorption tower C into the adsorption tower B decreases the pressure in the adsorption tower C to a first intermediate pressure, and residual gas in the adsorption tower B is discharged therefrom. Such gas is discharged through the switchover valve (d) and the gas discharge piping 6.

In the step 2, the adsorption step, the first pressurization step, and the second depressurization step are executed in the adsorption tower A, B, and C, respectively, establishing the gas flow shown in Fig. 2(b).

As shown in Figs. 1 and 2(b), the gas mixture is introduced into the adsorption tower A and the product gas is discharged out of the tower, in the same way as the step 1. The product gas is recovered in the same way as the step 1.

Meanwhile, the gas led out from the adsorption tower C through the gas extraction piping 3 is introduced into the adsorption tower B through the switchover valve (n), the flow control valve 7, the switchover valve (p), the reverse flow piping 4 and the switchover valve (j). The adsorption tower B, which previously discharged the residual gas through the switchover valve (d) and the gas discharge piping 6 in the step 1, closes the switchover valve (d) to thereby equilibrate the pressure between the adsorption tower B and the adsorption tower C, in the step 2. Such process further reduces the pressure in the adsorption tower C to the second intermediate pressure, which is lower than the first intermediate pressure, and also the adsorption tower B is pressurized.

In the step 3, the adsorption step, the second pressurization step, and the desorption step are executed in the adsorption tower A, B, and C, respectively, establishing the gas flow shown in Fig. 2(c).

As shown in Figs. 1 and 2(c), the gas mixture is introduced into the adsorption tower A and the product gas is discharged out of the tower, in the same way as the step 1. Although the product gas is recovered as in the step 1, a part of the product gas is introduced into the adsorption tower B through the product gas return piping 5, the switchover valve (q), the flow control valve 8, the reverse flow piping 4, and the switchover valve (j), so that the inside of the adsorption tower B is pressurized.

On the other hand, the adsorption tower C was depressurized through the steps 1 and 2, and the switchover valves (e), (m), (n), (o) are closed while the switchover valve (f) is open. Accordingly, the unnecessary gas is desorbed from the adsorbent in the adsorption tower C, and discharged out of the tower together with the gas residing therein. Such desorbed gas is discharged through the switchover valve (f) and the gas discharge piping 6.

Through the steps 4 to 6, as shown in Figs. 2(d) to 2(f), the first depressurization step, the second depressurization step and the desorption step are executed in the adsorption tower A similarly to the adsorption tower C through the steps 1 to 3. The adsorption step is consecutively executed in the adsorption tower B similarly to the adsorption tower A through the steps 1 to 3. The purging step, the first pressurization step and the second pressurization step are executed in the adsorption tower C similarly to the adsorption tower B through the steps 1 to 3.

Through the steps 7 to 9, as shown in Figs. 2(g) to 2(i), the purging step, the first pressurization step and the second pressurization step are executed in the adsorption tower A similar to the adsorption tower B through the steps 1 to 3. The first depressurization step, the second depressurization step and the desorption step are executed in the adsorption tower B similar to the adsorption tower C through the steps 1 to 3. The adsorption step is consecutively executed in the adsorption tower C similarly to the adsorption tower A through the steps 1 to 3.

Then the steps 1 to 9 described above are repeatedly executed in the adsorption towers A, B, and C, so that the unnecessary gas is removed from the gas mixture, and the product gas having high hydrogen gas concentration can be continuously obtained.

By the method according to the present invention, in separating hydrogen gas from the gas mixture obtained through the steam-reforming reaction of the hydrocarbon-based material by the PSA gas separation method, setting the location and the filling ratio of the activated carbon-based adsorbent and the zeolite-based adsorbent as described above enables further improving the hydrogen gas recovery rate.

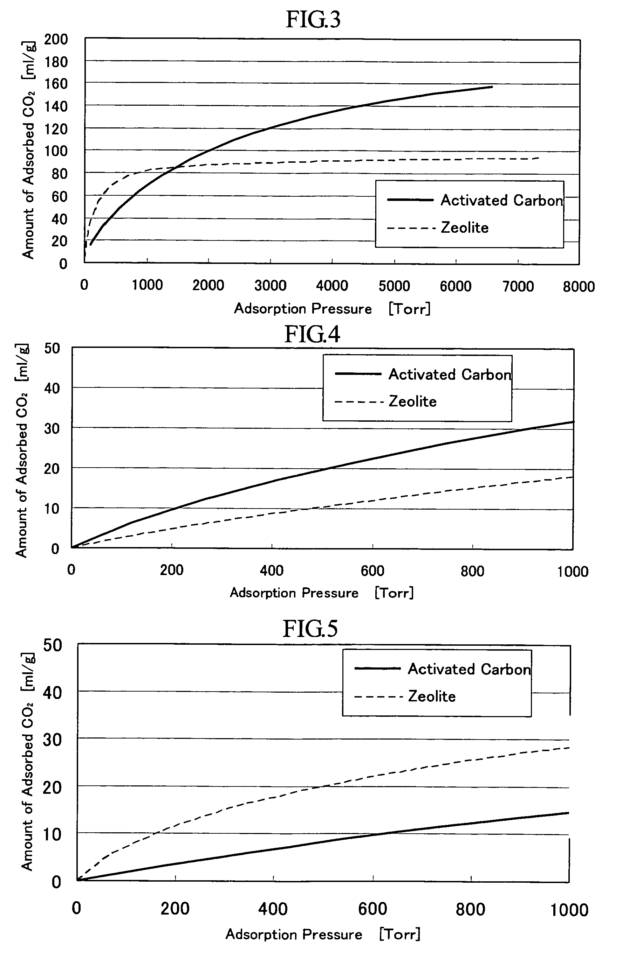

It is desirable to arrange the activated carbon-based adsorbent and the zeolite-based adsorbent in the manner mentioned above because of the difference in adsorption capability between these adsorbents with respect to gases. Figs. 3 to 5 indicate the adsorption isotherm at room temperature (25°C) of coconut shell activated carbon as the first adsorbent D of the present invention, and Ca-A type zeolite as the second adsorbent E, with respect to various substances to be removed. Fig. 3 indicates the carbon dioxide adsorption isotherm of the activated carbon and the zeolite. Fig. 4 indicates the methane adsorption isotherm of the activated carbon and the zeolite. Fig. 5 indicates the carbon monoxide adsorption isotherm of the activated carbon and the zeolite.

From the gradient of the curves of the adsorption isotherm shown in Figs. 3 to 5, it is understood that the activated carbon is suitable as the adsorbent with respect to carbon dioxide and methane, and that the zeolite is suitable as the adsorbent with respect to carbon monoxide. The amount of a specific gas component which is adsorbed to be removed is obtained by subtracting the adsorption load at the lower desorption pressure from the adsorption load at the higher adsorption pressure (partial pressure of the gas component). As shown in Figs. 3 to 5, the total amount of the carbon dioxide and the methane adsorbed by the activated carbon is greater than those of the zeolite, and the amount of carbon monoxide adsorbed by the zeolite is greater than that of the activated carbon.

As examples of the gas mixture applicable to the method according to the present invention, the composition of reformed gas obtained by steam-reforming reaction of the town gas predominantly composed of natural gas, and reformed gas obtained by steam-reforming reaction of methanol, are shown in Table 1. With respect to the gas mixture obtained by the steam-reforming of the town gas (left column of Table 1), the amount of the carbon dioxide adsorbed by the activated carbon and the amount of the carbon dioxide adsorbed by the zeolite are calculated based on Fig. 3, in the case where it is supposed that the adsorption pressure (maximum pressure) of the PSA is 0.85 MPaG, and that the desorption pressure is the atmospheric pressure.

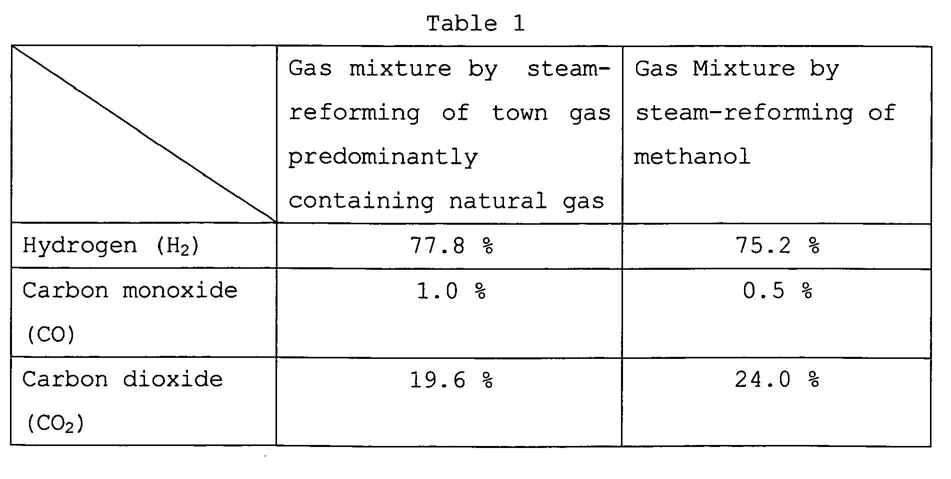

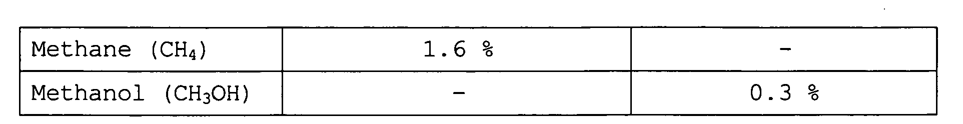

Since the carbon dioxide gas partial pressure in the adsorption step is obtained as (0.85+0.103)×(760/0.103)×0.196 = 1378 Torr, and the carbon dioxide gas partial pressure in the desorption step is obtained as 760×0.196 = 145 Torr, the carbon dioxide amount adsorbed by the activated carbon in the adsorption step becomes 80 ml/g, and the carbon dioxide amount adsorbed by the activated carbon in the desorption step becomes 28 ml/g. Accordingly, the carbon dioxide amount adsorbed to be removed, which is obtained by subtracting the adsorption load in the desorption step from the adsorbed amount in the adsorption step, becomes 52 ml/g. In contrast, the carbon dioxide amount adsorbed by the zeolite in the adsorption step becomes 83 ml/g, and the remainder of the adsorbed carbon dioxide in the desorption step becomes 57 ml/g, and hence the carbon dioxide amount adsorbed by the zeolite becomes 26 ml/g. Thus, the activated carbon is approximately twice superior in adsorption load of carbon dioxide per the weight of adsorbent to that of the zeolite. Further, in the case of zeolite, the adsorption load of carbon dioxide is over two times more than that of the activated carbon at the time of depressurization to the atmospheric pressure, therefore, the adsorption load of the unnecessary gas (for example, carbon monoxide) actually becomes lower than the amount indicated by the adsorption isotherm compared with the activated carbon, because of the influence of the absorbed carbon dioxide.

On the other hand, it is advantageous to set the adsorption pressure (maximum pressure) as high as possible in the adsorption step, because the higher adsorption pressure provides the higher carbon dioxide load on the adsorbent. However, the increase in adsorption load becomes significantly smaller beyond a certain level of pressure, and hence it is not practical to set the pressure higher than that level. Accordingly, it is practically preferable to set the maximum pressure in the adsorption step in a range of 0.5 to 4.0 MPa.

Next, with respect to the gas mixture obtained by the steam-reforming of the town gas, the each amount of the methane adsorbed by the activated carbon and the zeolite is calculated based on Fig. 4 in the case of the adsorption pressure, 0.85 MPaG, and the desorption pressure, the atmospheric pressure. Since the methane gas partial pressure is obtained as (0.85+0.103)×(760/0.103)×0.016 = 113 Torr in the adsorption step, and the methane gas partial pressure is obtained as 760×0.016 = 12 Torr in the desorption step, the methane amount adsorbed by the activated carbon becomes 6.0 ml/g in the adsorption step, and the methane amount in the desorption step becomes 0.5 ml/g. Accordingly, the methane amount adsorbed to be removed, which is obtained by subtracting the remainder of adsorption from the adsorbed amount, becomes 5.5 ml/g. In contrast, since the methane amount adsorbed by the zeolite in the adsorption step is 2.5 ml/g, and the adsorbed methane in the desorption step is 0.3 ml/g, the methane amount adsorbed to be removed by the zeolite becomes 2.2 ml/g. Thus, the activated carbon is approximately 2.5 times superior in absorption load of methane per weight of adsorbent, to the zeolite. Although 0.3% of methanol remains in the gas mixture after the steam-reforming of methanol, the activated carbon adsorbs a greater amount of methanol than the zeolite does, and have the same characteristic with methane.

As is understood from the foregoing description, by locating the activated carbon-based adsorbent (first adsorbent D) on the upstream side of the flow direction of the gas mixture in the adsorption tower, and the zeolite-based adsorbent (second adsorbent E) on the downstream side of the flow direction, the activated carbon-based adsorbent on the upstream side preferentially removes carbon dioxide and methane (or methanol) by adsorption, and the zeolite-based adsorbent on the downstream side, beyond the region where the activated carbon-based adsorbent is located, efficiently removes carbon monoxide by adsorption, because such unnecessary gas components are no longer present and hence the carbon monoxide concentration (partial pressure) becomes higher. For example, in the case where it is supposed that the activated carbon has entirely removed the carbon dioxide and the methane (or methanol) by adsorption, the composition of the gas that has passed through the activated carbon-based adsorbent becomes as shown in Table 2, and the carbon monoxide concentration becomes 1.3 to 1.4 times higher than that of the gas mixture in its initial state.

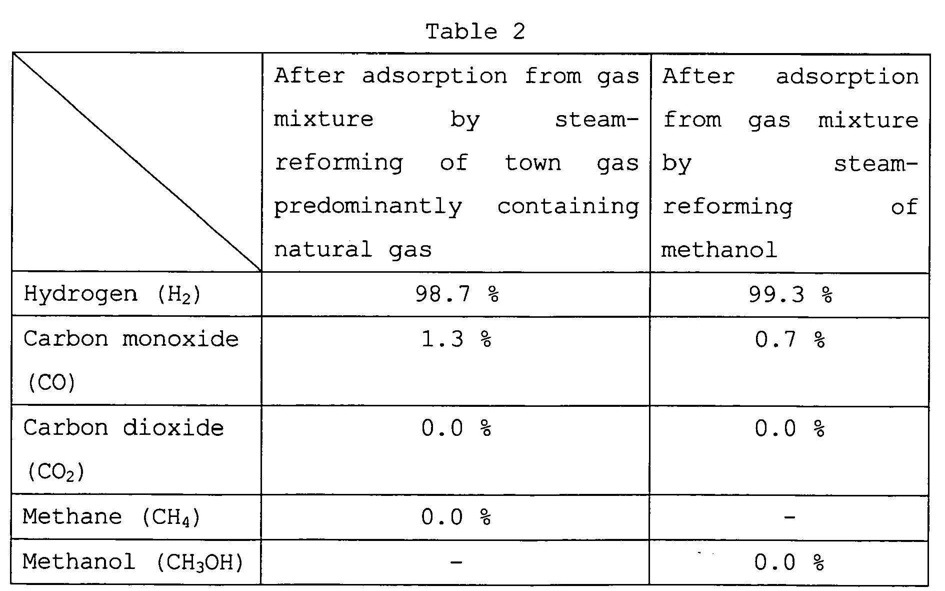

When the filling ratio of the activated carbon-based adsorbent (first adsorbent D) is set in a range of 60 to 80% and that of the zeolite-based adsorbent (second adsorbent E) is set in a range of 40 to 20%, the hydrogen gas recovery rate is improved prominently, as understood from the inventive examples which will be described below. Such effect is attained by optimization of the adsorption breakthrough curve by changing the filling ratio of the adsorbents.

Although the embodiment of the present invention has been described above, the scope of present invention is not limited to the foregoing embodiment. The specific structure of the method of separating hydrogen gas according to the present invention, and of the separation apparatus employed to carry out the method may be modified in various manners without departing from the spirit of the invention. For example, the number of the adsorption towers of the PSA gas separation apparatus may be two, or more other than the three-tower system according to the embodiment, and still the same advantageous effects can be accomplished.

### Inventive Examples

The benefit of the present invention will now be described, based on inventive examples and comparative examples.

### Inventive Example 1:

In this inventive example, the PSA separation apparatus X including three adsorption towers as shown in Fig. 1 was employed, to thereby separate hydrogen gas from a gas mixture by the separation method including those steps described above, under the following condition.

The adsorption towers were formed in a cylindrical shape having a diameter of 50 mm, and each of the towers were filled with coconut shell activated carbon having average pore diameter of 1.7 to 1.8 nm as the first adsorbent, and Ca-A type zeolite molecular sieve as the second adsorbent, in a total volume of 2.936 liters. In this inventive example, the filling amount of the adsorbents was so adjusted that the filling ratio (in volume) of the first adsorbent became 60%, and that of the second adsorbent became 40%. The gas mixture was prepared by steam-reforming reaction of town gas predominantly composed of natural gas, and the composition of the gas mixture in volume was: hydrogen gas 77.8%, carbon dioxide 19.6%, carbon monoxide 1.0%, and methane 1.6%. The gas mixture was supplied at the flow rate of 851 NL/hr. The adsorption pressure (maximum pressure) in the adsorption step was set at 850 kPa, the final pressure in the first depressurization step was set at 450 kPa, the final pressure in the second depressurization step was set at 225 kPa, and the minimum pressure in the desorption step was set at 6 kPa. The performance result is shown in Table 3.

### Inventive Examples 2, 3, Comparative examples 1 to 5:

The hydrogen gas separation was executed from the gas mixture in the same way as the inventive example 1, with different filling ratios of the first adsorbent to the second adsorbent, instead of 60% to 40%, of 70% to 30% (inventive example 2), 80% to 20% (inventive example 3), 0% to 100% (comparative example 1), 30% to 70% (comparative example 2), 50% to 50% (comparative example 3), 90% to 10% (comparative example 4), and 100% to 0% (comparative example 5), respectively. The performance result is shown in Table 3.

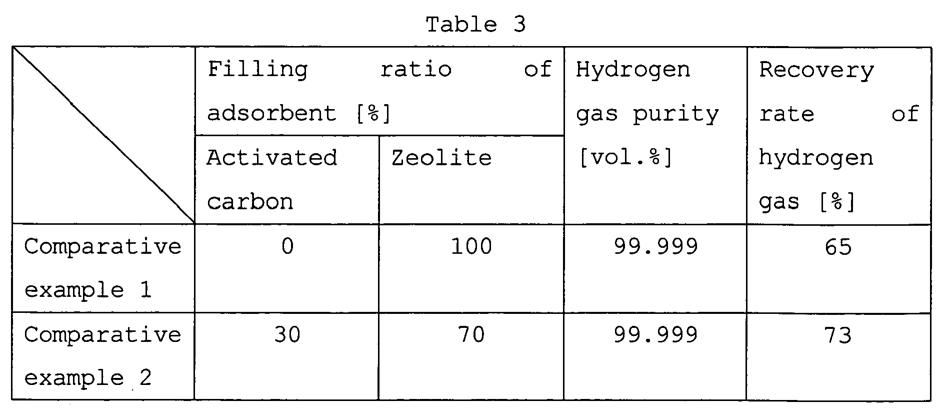

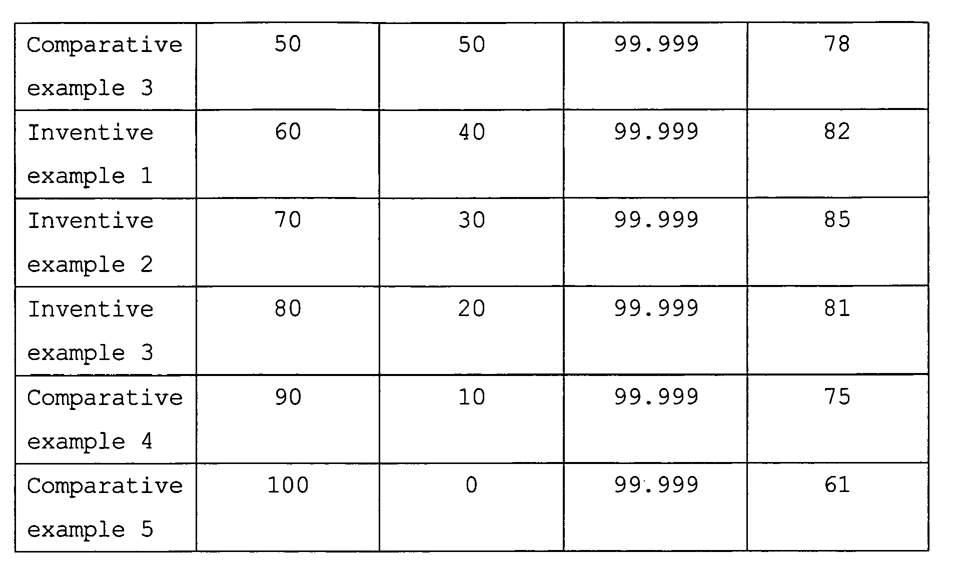

As is apparent from Table 3, in the case of obtaining the product gas containing high-purity hydrogen gas having purity of not less than 99.999% from the gas mixture obtained by steam-reforming of the town gas, when the filling ratio of the activated carbon is set in the range of 60 to 80%, the high hydrogen recovery rate of not less than 81% was achieved. In particular, a highest hydrogen recovery rate of 85% was achieved when the filling ratio of the activated carbon to the zeolite was 70% to 30%.

### Inventive example 4:

In this inventive example, the gas mixture was prepared by steam-reforming reaction of methanol, and the composition of the gas mixture in volume was: hydrogen gas 75.2%, carbon dioxide 24.0%, carbon monoxide 0.5%, and methanol 0.3%. The hydrogen gas separation was executed from such gas mixture in the same way as the inventive example 1. The performance result is shown in Table 4.

### Inventive examples 5, 6, comparative examples 6 to 10:

The hydrogen gas separation was executed from the gas mixture in the same way as the inventive example 4 except with different filling ratios of the first adsorbent to the second adsorbent, instead of 60% to 40%, of 70% to 30% (inventive example 5), 80% to 20% (inventive example 6), 0% to 100% (comparative example 6), 30% to 70% (comparative example 7), 50% to 50% (comparative example 8), 90% to 10% (comparative example 9), and 100% to 0% (comparative example 10), respectively. The performance result is shown in Table 4.

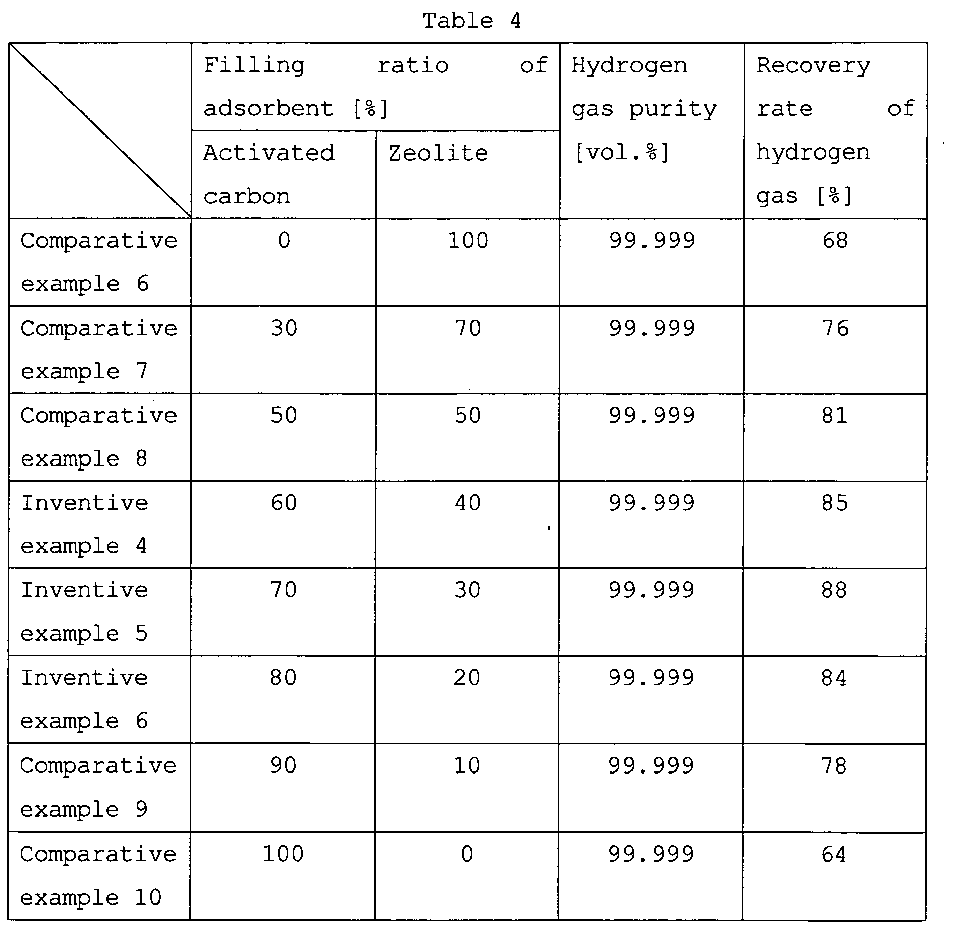

As is apparent from Table 4, in the case of obtaining the product gas containing high-purity hydrogen gas having purity of not less than 99.999% from the gas mixture obtained by steam-reforming of the methanol, by setting the filling ratio of the activated carbon in the range of 60 to 80%, the hydrogen recovery rate of not less than 84% was achieved. In particular, a highest hydrogen recovery rate of 88% was achieved when the filling ratios of the activated carbon to the zeolite were 70% to 30%.

### Inventive example 7:

In this inventive example, the adsorption towers were filled up to 70% with coal-based activated carbon (carbon molecular sieve) as the first adsorbent, and up to 30% with Ca-A type zeolite molecular sieve as the second adsorbent, in a total volume of 2.936 liters. The hydrogen gas separation was executed from the gas mixture in the same way as the inventive example 1. As a result, high-purity hydrogen gas having purity of not less than 99.999% was obtained at the recovery rate as high as 82%.

Thus, the present invention enables further improving the hydrogen gas recovery rate in hydrogen gas separation by the PSA process from a gas mixture obtained by steam-reforming reaction of a hydrocarbon-based material.

## Claims

1. A method of separating hydrogen gas from a gas mixture predominantly containing hydrogen as a main component, the hydrogen being obtained by steam-reforming reaction of a hydrocarbon-based material, the method being performed by pressure-swing adsorption process utilizing a plurality of adsorption towers loaded with an adsorbent, the method comprising repeating a cycle including an adsorption step and a desorption step, the adsorption step including introducing the gas mixture into the adsorption tower, adsorbing unnecessary gas in the gas mixture to the adsorbent, and leading out product gas having high hydrogen gas concentration from the adsorption tower, the desorption step including desorbing the unnecessary gas from the adsorbent and leading out desorbed gas from the adsorption tower, the desorbed gas containing the unnecessary gas and residual gas in the adsorption tower,
wherein the adsorbent includes an activated carbon-based first adsorbent located on an upstream side of a flow direction of the gas mixture in the adsorption tower and provided in an filling ratio of 60 to 80%, and a zeolite-based second adsorbent located on a downstream side of the flow direction and provided in an filling ratio of 40 to 20%.

2. The method of separating hydrogen gas according to claim 1, wherein the first adsorbent has average pore diameter of 1.5 to 2.0 nm .

3. The method of separating hydrogen gas according to claim 1, wherein the adsorption step includes setting an adsorption pressure of 0.5 to 4.0 MPa.

4. The method of separating hydrogen gas according to claim 1, wherein the hydrocarbon-based material contains at least one gaseous or liquid material selected from the group consisting of town gas predominantly composed of natural gas, propane, butane, gasoline, naphtha, kerosene, methanol, ethanol, and dimethylether.

5. An apparatus for separating hydrogen gas from a gas mixture predominantly containing hydrogen as a main component, the hydrogen being obtained by steam-reforming reaction of a hydrocarbon-based material, the apparatus comprising a plurality of adsorption towers loaded with an adsorbent to perform separation by pressure-swing adsorption step, the separation including introducing the gas mixture into the adsorption tower, adsorbing unnecessary gas in the gas mixture to the adsorbent, leading out product gas having high hydrogen gas concentration from the adsorption tower, desorbing the unnecessary gas from the adsorbent, and leading out desorbed gas, from the adsorption tower, the desorbed gas containing the unnecessary gas and residual gas in the adsorption tower,
wherein the adsorbent includes an activated carbon-based first adsorbent located on an upstream side of a flow direction of the gas mixture in the adsorption tower and provided in an filling ratio of 60 to 80%, and a zeolite-based second adsorbent located on a downstream side of the flow direction and provided in an filling ratio of 40 to 20%.

6. The apparatus for separating hydrogen gas according to claim 5, wherein the first adsorbent has average pore diameter of 1.5 to 2.0 nm.

7. The apparatus for separating hydrogen gas according to claim 5, wherein the hydrocarbon-based material contains at least one gaseous or liquid material selected from the group consisting of town gas predominantly composed of natural gas, propane, butane, gasoline, naphtha, kerosene, methanol, ethanol, and dimethylether.
